# EUROPEAN PATENT APPLICATION

(11) **EP 1 384 792 A1**
(43) Date of publication of application: **28.01.2004**
(21) Application number: 02700610.5
(22) Date of filing: 20.02.2002
(51) Int. Cl.: C22C 23/00

(54) **HYDROGEN OCCLUSION ALLOY**

(30) Priority: 20.02.2001 JP 2001042882
(71) Applicant: Mitsui Mining & Smelting Co., Ltd., Tokyo 141-8584 (JP); Nakayama, Shigeki, Ageo-shi, Saitama 362-0021 (JP); Kuji, Toshiro, Ageo-shi, Saitama 362-0021 (JP)
(72) Inventor: NAKAYAMA, Shigeki, 1333-2, Haraichi, Ageo, Saitama 362-0021 (JP); KUJI, Toshiro, 1333-2, Haraichi, Ageo, Saitama 362-0021 (JP)
(74) Representative: Whalley, Kevin
(86) International application number: PCT/JP2002/001448
(87) International publication number: WO 2002/066695

(57) **Abstract**

A hydrogen storing alloy comprising a body-centered cubic lattice structure having a composition of MgXₐV_{b} wherein "a" and "b" are such that 0.2≦a≦5 and 0.2≦b≦5 are satisfied, and "X" is one or more metals selected from a group consisting of Cr, Mn, Fe, Co, Cu and Ni. Since the body-centered cubic lattice structure is under the non-equilibrium state in which the bonding strength between the stored hydrogen and the alloy is relatively weak, the hydrogen absorption and release at the ordinary temperature level are possible. The conventional magnesium-based hydrogen storing alloy is sufficient in its higher hydrogen storing amount and lightness. However, the conventional alloy could not absorb and release at the ordinary temperature level, thereby inhibiting the commercial availability. The present invention can provide the magnesium-based hydrogen storing alloy which can absorb and release the hydrogen at the ordinary temperature level.

## Description

### Technical Field

The present invention relates to a hydrogen storing alloy, especially to a ternary hydrogen storing alloy which can absorb and release hydrogen at an ordinary temperature or at a temperature slightly elevated therefrom.

### Background Art

As a higher capacity rechargeable battery, a nickel-hydrogen battery (rechargeable cell) using a hydrogen storing alloy as a negative electrode is attracting attention in place of a Ni-Cd rechargeable cell.

Among the hydrogen storing alloys, the alloy having the composition of LaNi₅ is known to exhibit a higher hydrogen storing ability. However, the alloy is too expensive to be practically used.

Currently, the hydrogen storing alloy (Mm-based alloy) is frequently used containing misch metal (Mm) which is a mixture of rare-earth metals, and Ni, Al, Mn and Co.

The Mm-based alloy less expensive than the La-based alloy in forming the negative electrode is widely used as electrode material. This is because the Mm-based alloy can form a closed nickel-hydrogen battery having the longer cycle life and the lower inner pressure increase due to the generated gas during the overcharging.

However, the hydrogen storing alloy relatively excellent in its length of life has a defect of a relatively lower rechargeable hydrogen storing capacity.

On the other hand, a magnesium-based lighter hydrogen storing alloy is known to have a lager effective amount of hydrogen storing. The hydrogen storing amount of magnesium is theoretically 7 weight % or more, and the hydrogen storing amount of Mg₂Ni which is one of the magnesium- based hydrogen storing alloys is 3 weight % or more, generally about 3.6 weight %.

In addition to the larger hydrogen storing amount, the hydrogen storing alloy having the higher performance is required to conduct the hydrogen absorption and release at an ordinary temperature or at a slightly higher temperature.

In order to effectively utilize the higher hydrogen storing amount and the lightness of the magnesium-based alloy, the hydrogen absorption around the ordinary temperature and the release of the stored hydrogen also around the ordinary temperature are desirably.

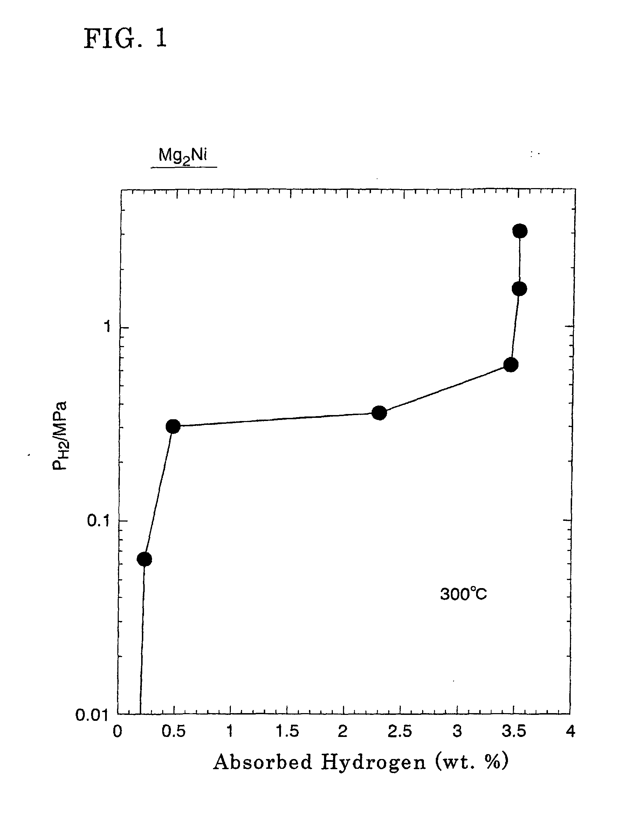

Fig.1 is a graph showing an isothermal hydrogen absorption curve of the lighter hydrogen storing alloy having the above Mg₂Ni composition at 573K (300°C) wherein the ordinate axis shows the hydrogen pressure in the logarithmic scale and the abscissa axis shows the amount of the absorbed hydrogen in weight %. As apparent from the graph, in the Mg₂Ni hydrogen storing alloy, the hydrogen pressure of about three atmospheric pressures (0.3 MPa) at 300°C is necessary to achieve 2 weight % of the hydrogen storing amount used in the practical level. However, the conditions are impractical because of the much higher temperature.

Although the present inventors have vigorously investigated metals added to and compositions of the magnesium-based alloy having the higher hydrogen storing ability, no practical magnesium-based alloy was present which could absorb and release hydrogen at an ordinary temperature level in the experiments by the inventors.

The present inventors have further continued the experiments to investigate the alloy compositions other than the conventional magnesium-based alloy, thereby reaching to the hydrogen storing alloy in accordance with the present invention which enables the hydrogen absorption and release at the ordinary temperature level.

### Disclosure of Invention

Accordingly, an object of the present invention is to provide the hydrogen storing alloy which enables the hydrogen absorption and release at the ordinary temperature level.

The present invention is a hydrogen storing alloy including a body-centered cubic lattice structure having a composition of MgXₐV_{b} wherein "a" and "b" are such that 0.2≦a ≦5 and 0.2≦b≦5 are satisfied, and "X" is one or more metals selected from a group consisting of Cr, Mn, Fe, Co, Cu and Ni. "X" in the composition may be single Ni, single Cu, single Co, single Cr, single Mn, single Fe or the combinations of one or more these metals.

The present invention relates to the hydrogen storing alloy which enables the hydrogen absorption and release at the ordinary temperature level, and is reached by the finding that a magnesium-based alloy with a body-centered cubic lattice structure which has not conventionally existed can implement the hydrogen absorption and release, especially the absorption, at the ordinary temperature level.

The crystal structure of the conventional Mg₂Ni magnesium-based alloy is hexagonal, and the hexagonal magnesium-based alloy has the strong bonding between hydrogen and the alloy so that an extremely stable hydride is formed by the absorption of hydrogen gas. Because of the stability of the hydride, the hydrogen cannot be released at the ordinary temperature, and the heating to about 300 °C is necessary for the hydrogen release. On the other hand, the Mg₂Ni magnesium-based alloy having the Laves structure does not at all absorb the hydrogen.

The present inventors have assumed that the hydrogen absorption and release at the ordinary temperatures can be achieved when the crystal structure of the magnesium-based alloy is relatively unstable or under the non-equilibrium state in which the bonding strength between the hydrogen and the alloy is relatively weak. Various magnesium-based alloys other than those having the hexagonal or the Laves structure have been examined, and the magnesium-based alloy having the body-centered cubic lattice structure can be obtained under the specified conditions and by using the specified composition.

Most of the magnesium-based alloys having the body-centered cubic lattice structures can absorb the hydrogen at the ordinary temperatures while maintaining the higher hydrogen storing ability. While the hydrogen release is hardly assumed to be conducted at such a temperature as low as that for the absorption, the release can be implemented at a temperature, for example, at 100 °C significantly lower than that attained by the conventional hydrogen storing alloy.

The magnesium-based alloy contains vanadium (V) as an essential element other than the magnesium, and one or more metals selected from the group consisting of Cr, Mn, Fe, Co, Cu and Ni, as a third component. The magnesium-based alloy can be prepared by using the mechanical alloying (MA) in which powders of the respective metal components are mechanically mixed and alloyed in a ball mill by using metal balls.

The magnesium-based alloy in accordance with the present invention desirably includes a ternary magnesium-based alloy such as Mg-Ni-V, Mg-Cu-V and Mg-Co-V each of which has the body-centered cubic lattice structure. In addition thereto, another ternary magnesium-based alloy such as Mg-Cr-V, Mg-Mn-V and Mg-Fe-V, and a multi-element magnesium-based alloy including two or more third elements other than Mg and V are included. The preferable multi-element magnesium-based alloys include Mg-Cr-Fe-V and Mg-Cr-Mn-V.

Each of the hydrogen storing alloys of the present invention does not always take the body-centered cubic lattice structure, and takes at specified compositions. The preferable compositions include, for example, MgNiV, MgCuV and MgCoV (a=1 and b=1 in each of the alloys) in which all the metals are alloyed in the equimolar composition.

While the compositions of the component metals, or the kind of "X" and the regions of "a" and "b", vary depending on each of the alloys, these values are established such that the hydrogen storing alloys take the body-centered cubic lattice structure. Specifically, the "a" and the "b" for the ternary magnesium-based alloys such as Mg-Ni-V, Mg-Cu-V and Mg-Co-V satisfy 0.2≦a≦5 and 0.2≦b≦5, respectively, and more preferably, 0.5≦a≦2 and 0.5≦b≦3.7, respectively. For the other ternary magnesium-based alloys and the multi-element magnesium-based alloys, the regions for the "a" and the "b" are somewhat narrower, or 0.5≦a ≦2 and 0.5≦b≦2, respectively.

The magnesium-based alloy of the present invention is excellent in its hydrogen storing ability and lightness to enable the hydrogen absorption and release at the ordinary temperature so that the alloy is conveniently portable and usable around the ordinary temperature for a longer period of time. The alloy is available for a number of uses requiring hydrogen and is especially useful for the hydrogen source of a fuel cell installed in a vehicle.

### Brief Description of Drawings

Fig.1 is a graph showing an isothermal hydrogen absorption curve of a conventional hydrogen storing alloy having a composition of Mg₂Ni.
Figs.2A to D are X-ray diffraction diagrams of Mg-Ni-V alloys of Example 1 prepared by mechanical alloying after specified periods of time.
Fig.3 is a graph showing the relation between a hydrogen gas pressure during hydrogen absorption and an amount of hydrogen storing of the Mg-Ni-V alloy obtained in Example 1.
Fig.4 is a ternary composition diagram.
Figs.5A to G are X-ray diffraction diagrams of seven Mg-Ni-V alloys having different compositions obtained in Example 1.
Fig.6 is a graph showing the relation between a hydrogen gas pressure during hydrogen absorption and an amount of hydrogen storing of the Mg-Cu-V alloy obtained in Example 3.
Figs.7A to G are X-ray diffraction diagrams of seven Mg-Co-V alloys having different compositions obtained in Example 3.
Figs.8A to C are X-ray diffraction diagrams of Mg-Co-V alloys of Example 5 prepared by mechanical alloying after specified periods of time.
Fig.9 is a graph showing the relation between a hydrogen storing pressure during hydrogen absorption and an amount of hydrogen storing of the Mg-Co-V alloy obtained in Example 5.
Figs.10A to C are X-ray diffraction diagrams of Mg-Mn-V alloys of Example 6 prepared by mechanical alloying after specified periods of time.
Figs.11A to C are X-ray diffraction diagrams of Mg-Fe-V alloys of Example 7 prepared by mechanical alloying after specified periods of time.

### Best Mode for Implementing Invention

Although Examples of a hydrogen storing alloy in accordance with the present invention will be described, the present invention shall not be deemed to be restricted thereto.

### Example 1

Into a cylindrical reaction vessel with a bottom having a diameter of 55 am and a height of 40 cm and made of tungsten carbide (WC), 0.6 g of magnesium having an average particle diameter of 500 µ m, 1.26 g of vanadium having an average particle diameter of 40 µ m and 1.46 g of nickel having an average particle diameter of 20 µ m were added (the molar ratio was adjusted to be 1:1:1 so that Mg1.0-Ni1.0-V1.0 was prepared). Further, balls having a diameter of 12 mm made of WC were accommodated in the vessel such that the ratio between the total amount of the powder and the total amount of the balls was 1:40. After the deaeration of the vessel and the replacement with argon, the cover of the vessel was closed. Then, after the vessel was fixed to a planet mill, the powder in the vessel was analyzed by using X-ray diffraction (XRD) while the inside of the vessel was agitated for a specified period of time (mechanical alloying).

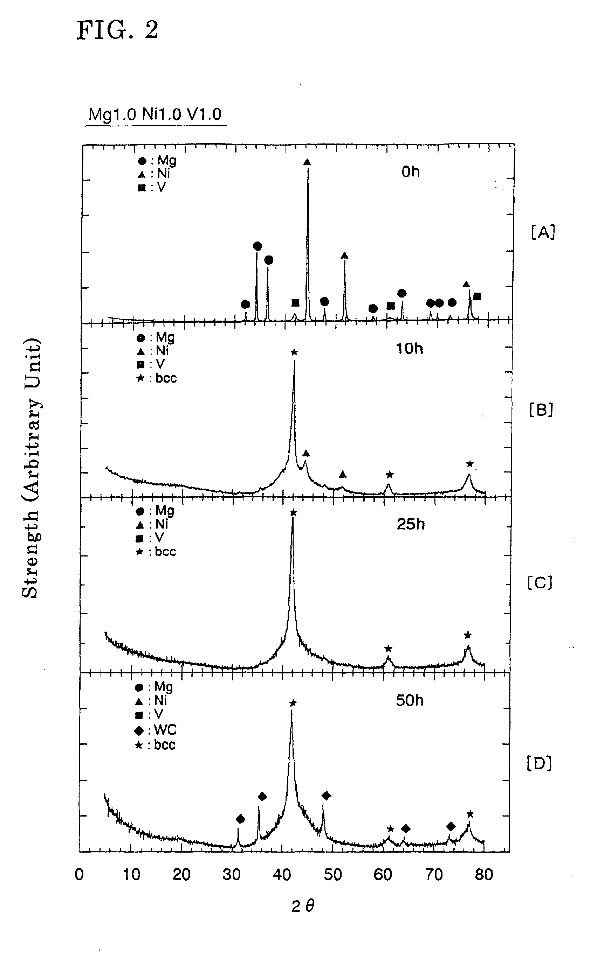

The X-ray diffraction diagrams at the start of the agitation and at the lapse of the specified periods of time are shown in Fig.2. Fig.2A is that for the start of the agitation, Fig.2B is that after 10 hours, Fig.2C is that after 25 hours and Fig.2D is that after 50 hours. In the respective drawings, ●, ▲, ■, 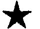 and ◆ show the X-ray diffraction peaks of the magnesium, the nickel, the vanadium, the body-centered cubic lattice (bcc) structure alloy generated by the agitation, and the WC, respectively.

In Fig.2A, only the diffraction peaks of the respective metal powders or of the magnesium, the nickel and the vanadium are observed. In Fig.2B, the diffraction peaks of the magnesium and the vanadium disappear, the diffraction peak of the nickel slightly remains and, in place thereof, a larger diffraction peak (2θ ≒ 42° ) of the bcc and two smaller diffraction peaks (2θ ≒ 61° and 77° ) of the bcc are generated. The disappear of the diffraction peaks of the magnesium and the vanadium indicates that the magnesium and the vanadium which do not usually make a solid solution were alloyed by means of the mechanical alloying.

In Fig.2C in which the agitation for 25 hours was performed, the diffraction peak of the nickel also disappears and three peaks only for the bcc remain. Accordingly, the mechanical alloying for 25 hours is sufficient for the preparation of the magnesium-based alloy. In Fig.2D in which the agitation for 50 hours was performed, five diffraction peaks attributable to the WC appear in addition to the three bcc peaks.

Upon the analysis of the alloy after 25 hours by using EDS (Energy Dispersion X-ray Spectroscopy), no segregation as the MgNiV was obtained and the alloy consisting of the three metals was obtained.

Judging from the result, the bcc structure has been apparently obtained by alloying the powders of the alloy-constituting metals by means of the mechanical alloying. The 10 hours agitation was insufficient, and the 25 hours agitation was required. The further agitation was not preferable because the WC in the vessel and the agitation balls was scraped to be included in the alloy.

Then, the relation between the hydrogen gas pressure and the weight % of the hydrogen absorbed in the alloy was measured by using the alloy after 25 hours.

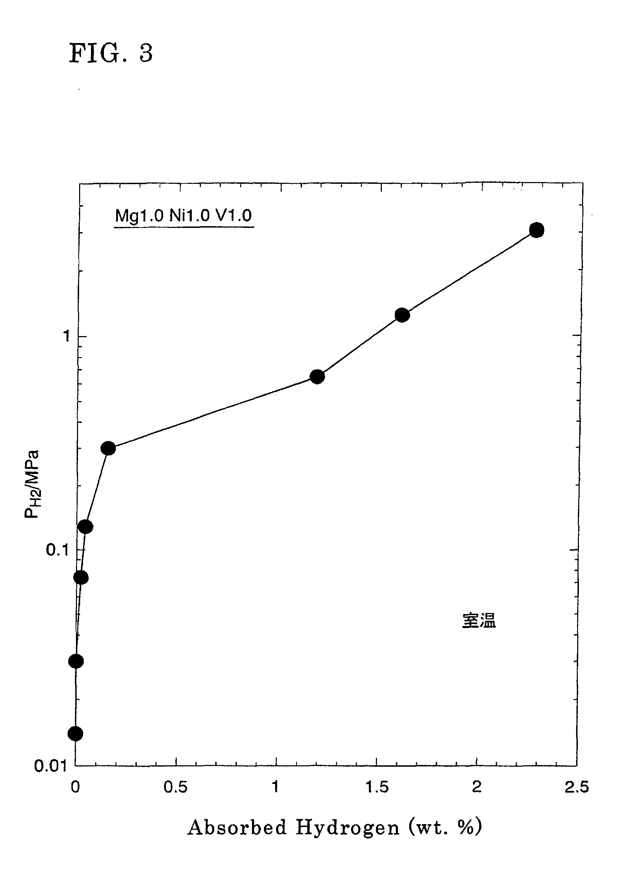

After the obtained alloy was accommodated in a vacuum vessel and the vessel was deaerated, hydrogen was introduced therein at an ordinary temperature such that the hydrogen gas pressure was adjusted to a specified value. The procedures were repeated eight times. The relation between the hydrogen gas pressure and the weight % of the hydrogen absorbed in the alloy with respect to the alloy in each procedure was shown in Fig.3 (isothermal hydrogen absorption curve or PCT curve). The curve in Fig.3 is ascribable to neither of the single vanadium nor the Mg₂Ni, and the formation of the bcc progressed.

In case of the Mg₂Ni alloy, the PCT curve appears around 10⁻⁵ MPa at the ordinary temperature, and the practicable hydrogen gas pressure is substantially near to the vacuum. On the contrary, in case of the magnesium-based alloy of the present invention, the hydrogen gas pressure was several atmospheric pressures in the practical level and the significant improvement could be observed.

As shown in Fig.3, about 1.2 weight % of, about 1.6 weight % of and about 2.3 weight % of the hydrogen was absorbed in the alloy at the hydrogen gas pressures of about 0.5 MPa (5 atmospheric pressures), of about 1.05 MPa (10.5 atmospheric pressures) and of about 1.2 MPa (12 atmospheric pressures), respectively. These hydrogen gas pressures and hydrogen absorption amounts are in the practical level.

When the alloy absorbing 2.3 weight % of the hydrogen was heated to 100 °C, almost 100 % of the stored hydrogen was released. It is apparent from this result that the absorption and the release of the hydrogen is substantially possible at the ordinary temperature.

### Example 2

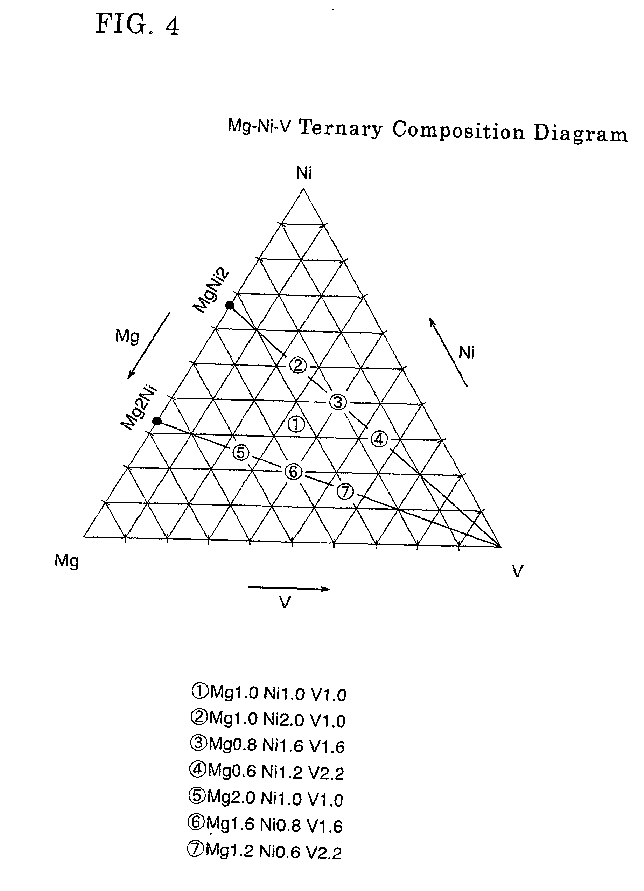

Fig.4 shows a ternary composition diagram of Mg-Ni-V In this Example, after magnesium-based alloys having the compositions of ① to ⑦ in the ternary composition diagram were prepared, X-ray diffraction diagrams after the lapse of 25 hours were obtained.

With respect to the alloys of ② to ④ similarly to ①, after the powders of Mg, Ni and V were so weighed and mixed that the desired composition was obtained, the composition of the mixture was changed toward the single vanadium in turn of ② → ③ → ④ in the ternary composition diagram by conducting mechanical alloying.

Also with respect to the alloys of ⑤ to ⑦, after the powders of Mg, Ni and V were so weighed and mixed that the desired composition was obtained, the composition of the mixture was changed toward the single vanadium in turn of ⑤ → ⑥ → ⑦ in the ternary composition diagram by conducting mechanical alloying.

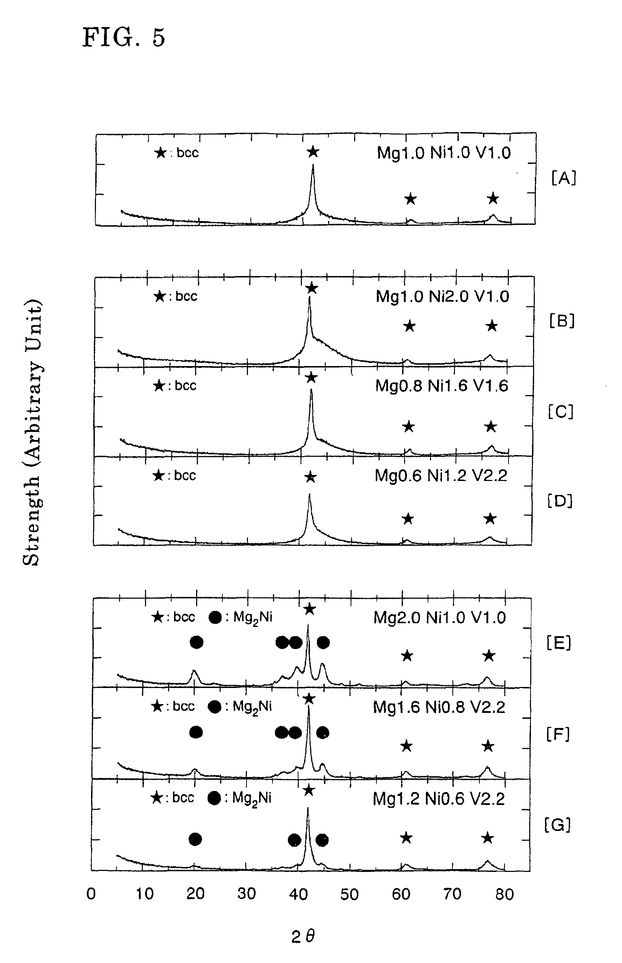

The X-ray diffraction diagrams of these seven alloys are shown in Fig.5. Figs.5A to 5G correspond to the X-ray diffraction diagrams of the compositions ① to ⑦ in this turn.

In the composition diagram, while almost all the compositions were converted into the bcc alloys (Figs.5B to 5D) in the examples of the compositions on the line drawn from MgNi₂ to the vanadium, the bcc alloys were formed with the slight amount of Mg₂Ni (Figs.5E to 5G) in the examples of the compositions on the line drawn from Mg₂Ni to the vanadium.

### Example 3

An Mg-Cu-V alloy was prepared in 25 hours under the same conditions as those of Example 1 except that, in place of the nickel, 1.45 g of copper having an average particle diameter of 20 µm was used (the molar ratio was adjusted 1:1:1 to prepare Mg1.0-Cu1.0-V1.0).

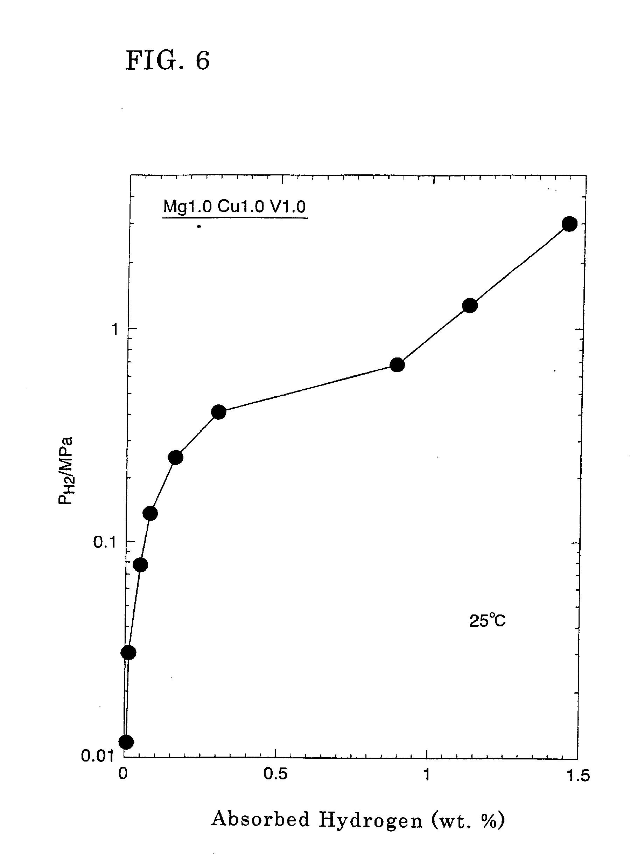

Then, the relation between the hydrogen gas pressure and the amount of hydrogen stored in the alloy was measured by using the above alloy similarly to Example 1. The result is shown in the graph of Fig.6.

As apparent from Fig.6, about 0.9 weight % of, about 1.1 weight % of and about 1.4 weight % of the hydrogen was absorbed in the alloy at the hydrogen gas pressures of about 0.7 MPa (7 atmospheric pressures), of about 1.05 MPa (10.5 atmospheric pressures) and of about 1.2 MPa (12 atmospheric pressures), respectively. These hydrogen gas pressures and hydrogen absorption amounts are in the practical level.

When the alloy absorbing 1.4 weight % of the hydrogen was heated to 100 °C, almost 100 % of the stored hydrogen was released. It is apparent from this result that the absorption and the release of the hydrogen is substantially possible at the ordinary temperature.

### Example 4

Similarly to Example 2, after magnesium-based alloys having the compositions of ① to ⑦ in a ternary composition diagram of Mg-Cu-V were prepared, X-ray diffraction diagrams after the lapse of 25 hours were obtained. The ternary composition diagram of Mg-Cu-V is obtained by replacing the Ni in the ternary composition diagram of Mg-Ni-V with Cu, and the compositions of ① to ⑦ are obtained by replacing the Ni with Cu in Fig.4.

With respect to the alloys of ② to ④ similarly to ①, after the powders of Mg, Cu and V were so weighed and mixed that the desired composition was obtained, the composition of the mixture was changed toward the single vanadium in turn of ② → ③ → ④ in the ternary composition diagram by conducting mechanical alloying.

Also with respect to the alloys of ⑤ to ⑦, after the powders of Mg, Cu and V were so weighed and mixed that the desired composition was obtained, the composition of the mixture was changed toward the single vanadium in turn of ⑤ → ⑥ → ⑦ in the ternary composition diagram by conducting mechanical alloying.

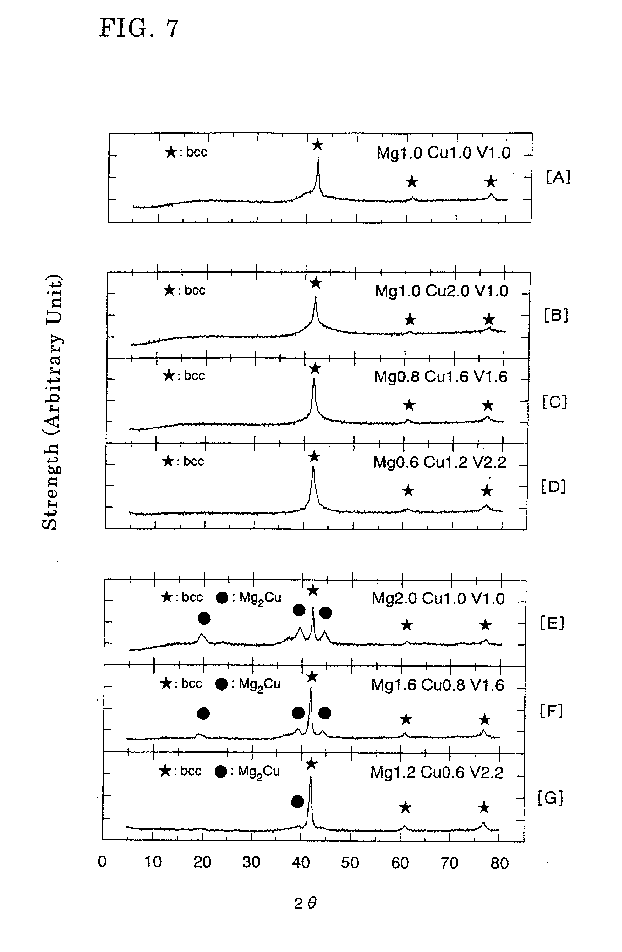

The X-ray diffraction diagrams of these seven alloys are shown in Fig.7. Figs.7A to 7G correspond to the X-ray diffraction diagrams of the compositions ① to ⑦ in this turn.

In the composition diagram, while almost all the compositions were converted into the bcc alloys (Figs. 7B to 7D) in the examples of the compositions on the line drawn from MgCu₂ to the vanadium, the bcc alloys were formed with the slight amount of Mg₂Cu (Figs.7E to 7G) in the examples of the compositions on the line drawn from Mg₂Cu to the vanadium.

### Example 5

An alloy was prepared in a specific length of time under the same conditions as those of Example 1 with agitation except that, in place of the nickel, 1.45 g of cobalt having an average particle diameter of 20 µ m was used (the molar ratio was adjusted 1:1:1 to prepare Mg1.0-Co1.0-V1.0), and the powders in vessels were analyzed by using X-ray diffraction (XRD).

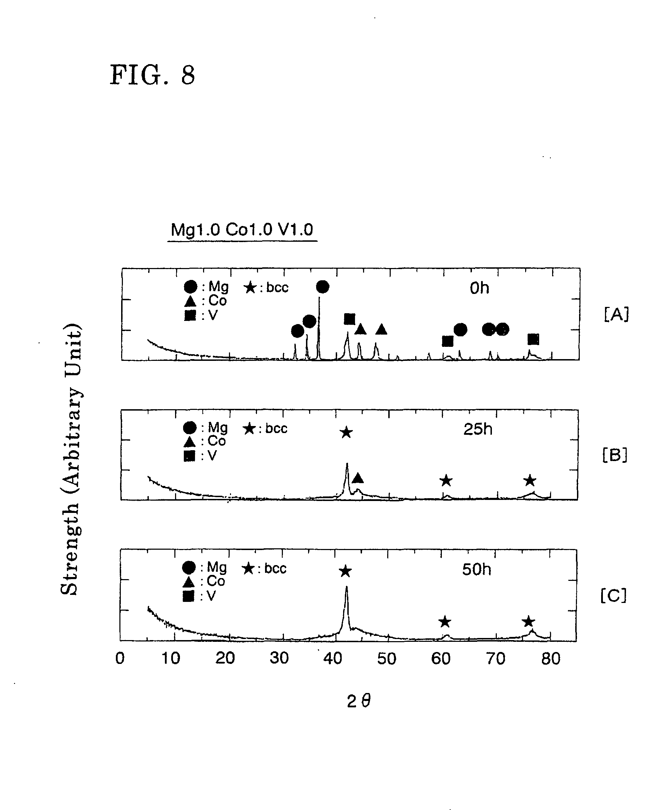

The X-ray diffraction diagrams at the start of the agitation and at the lapse of the specified periods of time are shown in Fig.8. Fig.8A is that for the start of the agitation, Fig.8B is that after 25 hours and Fig.8C is that after 50 hours. In the respective drawings, **●, ▲, ■** and 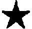 show the X-ray diffraction peaks of the magnesium, the cobalt, the vanadium, and the body-centered cubic lattice (bcc) structure alloy generated by the agitation, respectively.

In Fig.8A, only the diffraction peaks of the respective metal powders or of the magnesium, the cobalt and the vanadium are observed. In Fig.8B after 25 hours of agitation, the diffraction peaks of the magnesium and the vanadium disappear, the diffraction peak of the cobalt slightly remains and, in place thereof, a larger diffraction peak (2 θ ≒ 42° ) of the bcc and two smaller diffraction peaks (2θ ≒ 61° and 77° ) of the bcc are generated. This indicates that the magnesium and the vanadium which do not usually make a solid solution were alloyed by means of the mechanical alloying.

In Fig.8C in which the agitation for 50 hours was performed, the diffraction peak of the cobalt also disappears and three peaks only for the bcc remain. The obtained alloy was analyzed to be an alloy of Mg1.0-Co1.0-V1.0 having a bcc structure.

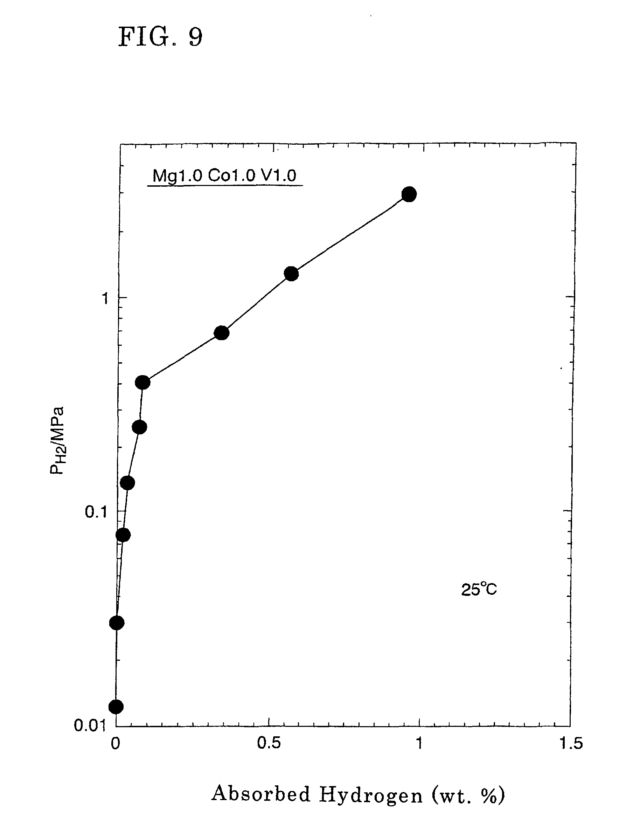

Then, the relation between the hydrogen gas pressure and the weight % of the hydrogen absorbed in the alloy was measured similarly to Example 1 by using the alloy after 50 hours. The isothermal hydrogen absorption curve (PCT curve) obtained is shown in Fig.9.

As apparent from Fig.6, about 0.35 weight % of, about 0.55 weight % of and about 0.95 weight % of the hydrogen was absorbed in the alloy at the hydrogen gas pressures of about 0.8 MPa (8 atmospheric pressures), of about 1.05 MPa (10.5 atmospheric pressures) and of about 1.2 MPa (12 atmospheric pressures), respectively. These hydrogen gas pressures and hydrogen absorption amounts are in the practical level.

When the alloy absorbing 0.95 weight % of the hydrogen was heated to 100 °C, almost 100 % of the stored hydrogen was released. It is apparent from this result that the absorption and the release of the hydrogen is substantially possible at the ordinary temperature.

### Example 6

An alloy was prepared in a specific length of time under the same conditions as those of Example 1 with agitation except that, in place of the nickel, 1.4 g of manganese having an average particle diameter of 20 µ m was used (the molar ratio was adjusted 1:1:1 to prepare Mg1.0-Mn1.0-V1.0), and the powders in vessels were analyzed by using X-ray diffraction (XRD).

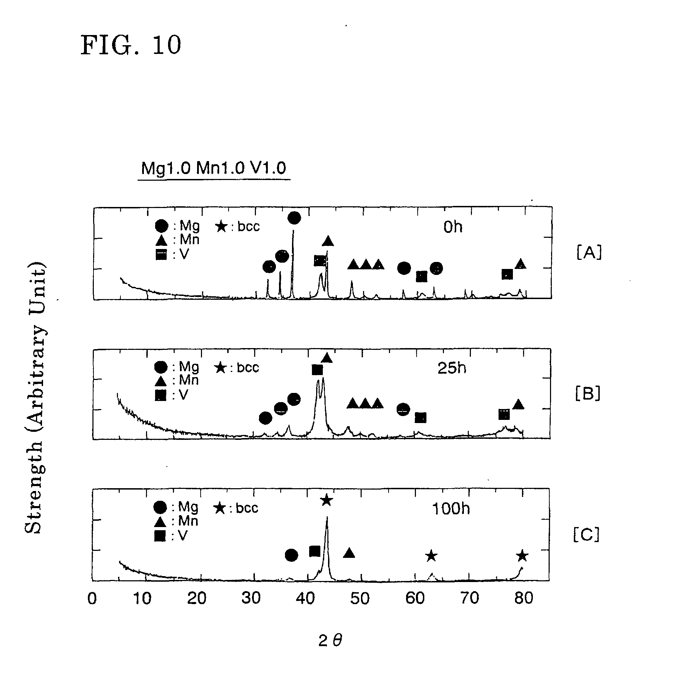

The X-ray diffraction diagrams at the start of the agitation and at the lapse of the specified periods of time are shown in Fig.10. Fig.10A is that for the start of the agitation, Fig.10B is that after 25 hours and Fig.10C is that after 100 hours. In the respective drawings, ●, ▲, ■ and 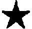 show the X-ray diffraction peaks of the magnesium, the manganese, the vanadium, and the body-centered cubic lattice (bcc) structure alloy generated by the agitation, respectively.

In Fig.10A, only the peaks of the respective metal powders or of the magnesium, the manganese and the vanadium are observed. In Fig.10B after 25 hours of agitation, the bcc is not formed though the increase or the decrease of the peak areas is observed. In Fig.10C in which the agitation for 100 hours was performed, though the peaks for the respective peaks slightly remain, almost all the peaks are only the three bcc peaks. The obtained alloy was analyzed to be an Mg1.0-Mn1.0-V1.0 alloy having the bcc structure.

### Example 7

An alloy was prepared in a specific length of time under the same conditions as those of Example 1 with agitation except that, in place of the nickel, 1.41 g of iron having an average particle diameter of 75 µ m was used (the molar ratio was adjusted 1:1:1 to prepare Mg1.0-Fe1.0-V1.0), and the powders in vessels were analyzed by using X-ray diffraction (XRD).

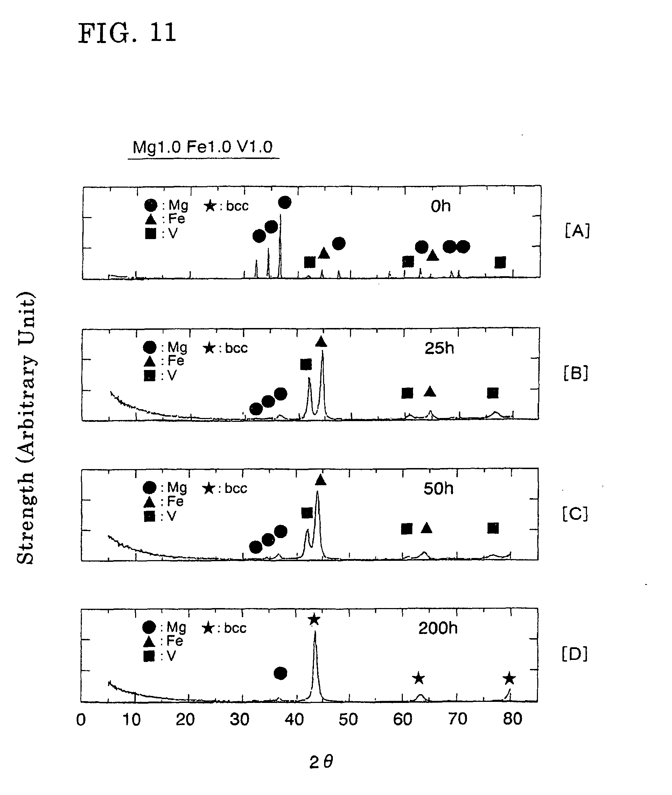

The X-ray diffraction diagrams at the start of the agitation and at the lapse of the specified periods of time are shown in Fig.11. Fig.11A is that for the start of the agitation, Fig.11B is that after 25 hours, Fig.11C is that after 50 hours and Fig.11D is that after 100 hours. In the respective drawings, ●, ▲, ■ and 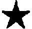 show the X-ray diffraction peaks of the magnesium, the iron, the vanadium, and the body-centered cubic lattice (bcc) structure alloy generated by the agitation, respectively.

In Fig.11A, only the peaks of the respective metal powders or of the magnesium, the iron and the vanadium are observed. In Fig.11B after 25 hours of agitation and Fig.11C after 50 hours of agitation, the bcc is not formed though the increase or the decrease of the peak areas is observed. In Fig.11D in which the agitation for 200 hours was performed, though the peak for the magnesium slightly remains, almost all the peaks are only the three bcc peaks. The obtained alloy was analyzed to be an Mg1.0-Fe1.0-V1.0 alloy having the bcc structure.

As apparent from the foregoing description, the hydrogen storing alloy of the present invention is the magnesium-based alloy. The body-centered cubic lattice structure under the non-equilibrium state together with the higher hydrogen storing ability and the lightness intrinsically possessed by the magnesium-based alloy enables the hydrogen absorption and release at the ordinary temperature level. Accordingly, the hydrogen storing alloy can be provided which absorbs and releases a relatively large amount of hydrogen around the ordinary temperature and is convenient in its handling.

## Claims

1. A hydrogen storing alloy comprising a body-centered cubic lattice structure having a composition of MgXₐV_{b} wherein "a" and "b" are such that 0.2≦a≦5 and 0.2≦b≦5 are satisfied, and "X" is one or more metals selected from a group consisting of Cr, Mn, Fe, Co, Cu and Ni.

2. A hydrogen storing alloy comprising a body-centered cubic lattice structure having a composition of MgNiₐV_{b} wherein "a" and "b" are such that 0.2≦a≦5 and 0.2≦b≦5 are satisfied.

3. A hydrogen storing alloy comprising a body-centered cubic lattice structure having a composition of MgCuₐV_{b} wherein "a" and "b" are such that 0.2 ≦a≦5 and 0.2≦b≦5 are satisfied.

4. A hydrogen storing alloy comprising a body-centered cubic lattice structure having a composition of MgCoₐV_{b} wherein "a" and "b" are such that 0.2≦a≦5 and 0.2≦b≦5 are satisfied.

5. A hydrogen storing alloy comprising a body-centered cubic lattice structure having a composition of MgCrₐV_{b} wherein "a" and "b" are such that 0.2≦a≦5 and 0.2≦b≦5 are satisfied.

6. A hydrogen storing alloy comprising a body-centered cubic lattice structure having a composition of MgMnₐV_{b} wherein "a" and "b" are such that 0.2≦a≦5 and 0.2≦b≦5 are satisfied.

7. A hydrogen storing alloy comprising a body-centered cubic lattice structure having a composition of MgFeₐV_{b} wherein "a" and "b" are such that 0.2≦a≦5 and 0.2≦b≦5 are satisfied.

8. A hydrogen storing alloy comprising a body-centered cubic lattice structure having a composition of MgXₐV_{b} wherein "a" and "b" are such that 0.2≦a≦5 and 0.2≦b≦5 are satisfied, and "X" is two or more metals selected from a group consisting of Cr, Mn, Fe, Co, Cu and Ni.
